Europäisches Patentamt

European Patent Office

Office européen des brevets

(11) Numéro de publication:

# 0 194 210
## A1

## ⑫ DEMANDE DE BREVET EUROPEEN

㉑ Numéro de dépôt: 86420023.3

㉒ Date de dépôt: 23.01.86

(51) Int. Cl.⁴: **A 01 K 55/00**, A 01 M 13/00

㉚ Priorité: 24.01.85 FR 8501251

㊸ Date de publication de la demande: **10.09.86**
**Bulletin 86/37**

㊻ Etats contractants désignés: **BE DE FR GB IT**

㉛ Demandeur: **Furodet, Philippe, Pont Astier,**
**F-63190 Lezoux (FR)**

㉒ Inventeur: **Furodet, Philippe, Pont Astier, F-63190 Lezoux**
**(FR)**

㊹ Mandataire: **Caradot, Patrice, MAISONNIER,**
**CORNILLON, CARADOT 15 rue Albert Premier B.P. 247,**
**F-42006 Saint Etienne Cédex (FR)**

㊽ **Enfumoir à chargement par dessous et son procédé de fabrication.**

㊼ L'invention concerne un enfumoir avec une ouverture par un volet (6), par laquelle on peut introduire une cartouche (7) contenant le produit fumigène.

L'ensemble est réalisé par découpage et emboutissage.

Application: apiculture.

0194210

1

ENFUMOIR A CHARGEMENT PAR DESSOUS ET SON PROCEDE DE FABRICATION

L'invention concerne la réalisation d'un enfumoir pour enfumer les abeilles afin de pouvoir extraire les cadres remplis de miel des ruches sans problème.

Tout apiculteur est obligé d'utiliser un enfumoir chaque fois qu'il doit travailler sur une ruche, soit pour les surveiller, soit pour récupérer le miel.

Actuellement, un enfumoir est constitué :

- d'une boite inférieure dont la réalisation est comparable à la réalisation d'une boite qui serait roulée puis sertie, d'une partie conique ou sphérique supérieure formant couvercle articulée sur la boite inférieure permettant d'orienter les fumées et d'assurer l'étanchéité pendant le fonctionnement,

- d'une grille support de braises dans la partie basse de la boite inférieure,

- d'un soufflet constitué de deux plaques généralement en bois et reliées par une toile par clouage ou par agrafage.

L'invention est remarquable par le procédé de fabrication très originale appliquée à l'enfumoir (emboutissage plus découpage) et l'assemblage longitudinal de celui-ci.

Cette invention remarquable est intéressante permet de réaliser plus particulièrement un enfumoir dont le corps et l'entonnoir de sortie des fumées sont monobloc.

Le chargement est réalisé par le dessous à l'aide d'un couvercle articulé prévu à cet effet.

L'enfumoir selon l'invention se compose d'un corps, de préférence cylindrique, dont l'extrémité supérieure se termine par une forme tronc conique ouverte à son extrémité.

La partie inférieure de ce corps comporte un volet articulé pouvant s'ouvrir pour permettre le chargement d'une cartouche dont la forme extérieure correspond à la forme intérieure du corps.

Cette cartouche sera donc de préférence cylindrique. Elle comportera à sa base et à sa partie supérieure des parois ajourées.

Sur le volet ou sur la paroi inférieure de la cartouche, seront fixés un ou plusieurs appuis permettant de surélever le fond de la cartouche par rapport au volet articulé, de telle sorte que la circulation de l'air soit libre entre ce volet et le fond de la cartouche.

Selon une autre caractéristique de l'invention, le fond de la cartouche est amovible de façon à pouvoir y faire pénétrer les produits produisant de la fumée.

Ce fond sera maintenu contre la cartouche par une ou plusieurs griffes déformables '

Selon une autre caractéristique de l'invention, le soufflet sera fixé sur la paroi latérale extérieure de l'enfumoir et une canalisation reliera ce soufflet à l'intérieur de l'enfumoir.

Selon une autre caractéristique de l'invention, ce soufflet aura une forme de demi-ballon.

Le procédé de réalisation de l'enfumoir est également remarquable. Le corps cylindrique et son prolongement tronc-conique est réalisé en deux demi-coquilles découpées et embouties reliées ensuite par leurs flancs, soit par soudure, soit par agrafage, soit par sertissage.

On comprend ainsi les avantages de l'invention et de son procédé de réalisation :

- Le chargement est réalisé par le bas permettant d'éviter à l'apiculteur de s'enfumer lui-même ou décorner les bordures de l'appareil

- L'apiculteur peut aisément transporter plusieurs cartouches prêtes à l'emploi

- Le procédé de réalisation est économique car l'appareil est réalisé par découpage et formage dans des tôles d'acier, de préférence inoxydable.

Les dessins annexés, donnés à titre d'exemples non limitatifs, permettront de mieux comprendre les caractéristiques de l'invention et de son procédé de réalisation.

La figure 1 est une vue en coupe d'un enfumoir selon l'invention.

La figure 2 est une vue d'un mode de réalisation différent de l'enfumoir en variante.

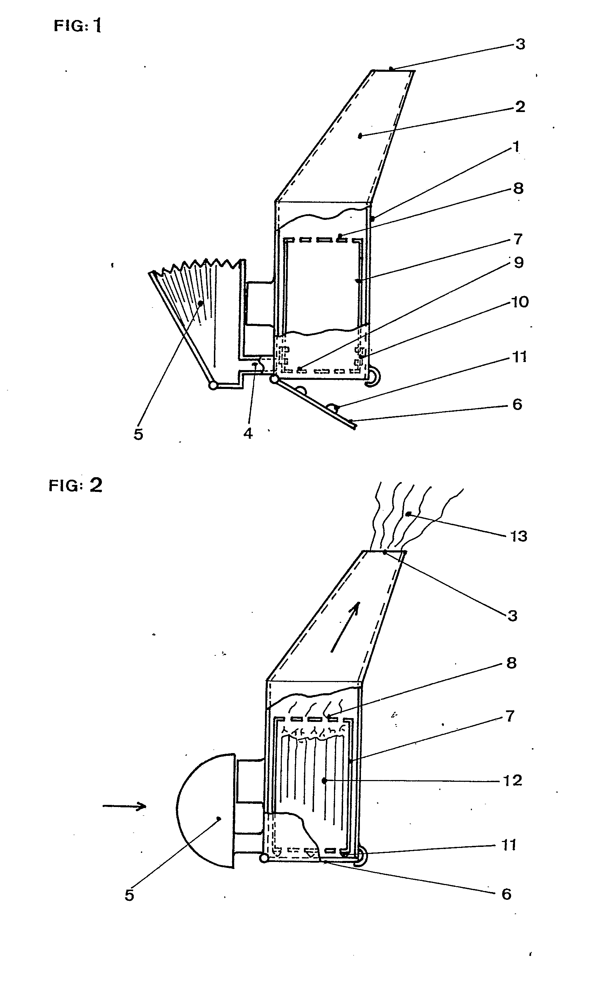

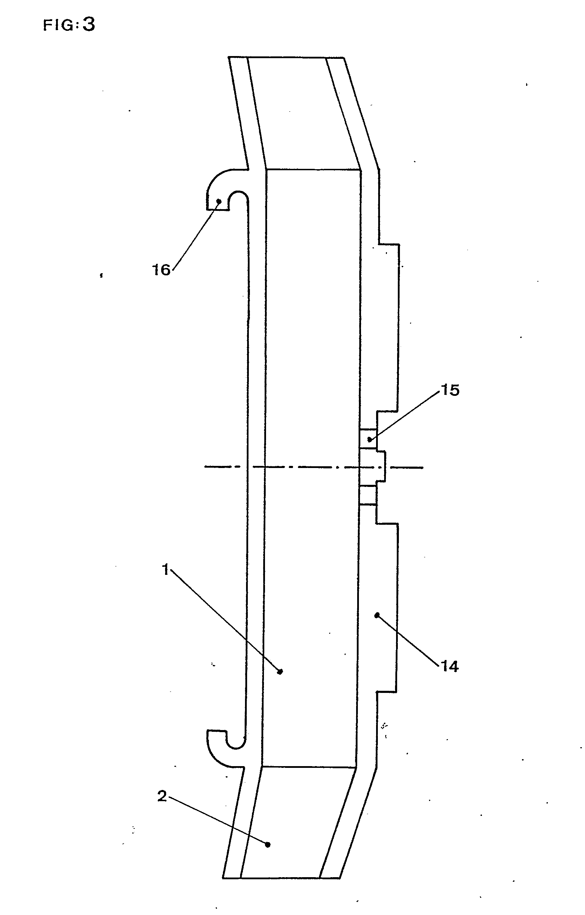

La figure 3 est une vue de la forme de la tôle découpée avant emboutissage On a représenté sur la figure 1 une vue de face de l'enfumoir selon l'invention. Celui-ci se compose d'un corps (1), par exemple cylindrique, prolongé par une partie tronc conique (2) ouverte à sa partie supérieure (3). Une canalisation (4) à sa partie inférieure le relie à un soufflet (5). Sa partie basse comporte un volet (6) pivotant, permettant l'entrée d'une cartouche (7). Celle-ci comporte à sa partie supérieure (8) des ouvertures ainsi qu'à sa partie inférieure (9). Celle-ci est amovible et tient grâce à des éléments déformables (10). Des plots (11) sont prévus sur le volet (6) pour surélever la cartouche (7) par rapport à celui-ci. En variante, ces plots (11) pourraient être fixés à la cartouche (7).

On a représenté sur la figure 2 une variante de réalisation de l'enfumoir selon l'invention.

Le soufflet (5) a une forme en demi-ballon, ce qui correspond à un mode de réalisation économique. Les plots (11) sont fixés sous la cartouche (7), ce qui permet de la maintenir surélevée par rapport au volet (6) pendant l'utilisation de l'enfumoir. On a schématisé sur ce dessin l'utilisation de l'enfumoir. La cartouche (7) contient le produit (12) à consummer, par exemple un papier spécial à combustion lente. Lorsque le soufflet (5) est manoeuvré, la fumée (13) s'échappe à travers la paroi supérieure (8) de la cartouche (7) et est projetée par l'ouverture (3).

On a représenté sur la figure 3 une vue de la forme de métal découpée à plat pour la mise en oeuvre du procédé de fabrication selon l'invention.

Cette forme de métal permet d'obtenir la partie tronc conique (2), le corps cylindrique (1), le support de soufflet (14), le raccordement (15) d'air vers le soufflet, éventuellement un crochet (16).

Selon une variante de réalisation, le corps (1) et la partie tronc conique (2) sont emboutis d'une pièce dans une tôle unique de forme appropriée.

4

REVENDICATIONS

1. Enfumoir destiné principalement à l'apiculture, caractérisé en ce qu'il comporte un corps (1) prolongé par une partie (2) ressérée à son extrémité et comportant une ouverture à sa partie basse opposée fermée par un volet (6) permettant d'introduire une cartouche (7) contenant le produit générateur de fumée, tandis qu'au moins un raccordement (15) vers le soufflet (14) est prévu dans la paroi du corps (1).

2. Enfumoir selon la revendication 1, caractérisé en ce que le corps (1) est cylindrique et la partie ressérée (2) tronc conique.

3. Enfumoir selon l'une quelconque des revendications 1 et 2, caractérisé en ce que la forme extérieure de la cartouche (7) est identique à la forme intérieure du corps (1).

4. Cartouche selon l'une quelconque des revendications 1 et 3, caractérisée en ce que sa partie supérieure (8) et sa partie inférieure (9) comportent des ouvertures.

5. Cartouche selon l'une quelconque des revendications 3 et 4, caractérisée en ce que sa partie inférieure (9) est amovible.

6. Enfumoir selon l'une quelconque des revendications 1 et 4, caractérisé en ce que des plots (11) sont prévus sur le volet (6) sur la partie inférieure (9) de la cartouche (7) pour ménager un espace libre entre eux.

7. Procédé pour la fabrication de l'enfumoir selon la revendication 1, caractérisé en ce que l'enfumoir est découpé dans une tôle en deux parties symétriques embouties, ces deux parties étant fixées entre elles par soudure continue pour former le corps (1) et la partie ressérée (2).

8. Procédé pour la fabrication de l'enfumoir selon la revendication 7, caractérisé en ce que les ouvertures (3) et (5) sont prévues dans le découpage de la tôle.

9. Procédé pour la fabrication de l'enfumoir selon l'une quelconque des revendications 7 et 8, caractérisé en ce que la tôle est de l'acier inoxydable.

10. Procédé pour la fabrication de l'enfumoir selon la revendication 1, caractérisé en ce que le corps (1) et la partie ressérée (2) sont emboutis dans une tôle unique.

FIG: 1

FIG: 2

0194210

FIG: 3

Office européen
des brevets

**RAPPORT DE RECHERCHE EUROPEENNE**

0194210
Numero de la demande

EP 86 42 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-1 574 408 (OREGGIA) * En entier * | 1,2,4 | A 01 K 55/00 A 01 M 13/00 |
| A | GB-A- 661 055 (MOUNTAIN GREY) * Figures 1-3; page 2, lignes 31-116 * | 1 | |
| A | DE-C- 367 000 (SCHIRNEKER) * Figure 3; page 2, lignes 25-80 * | 3-5 | |

DOMAINES TECHNIQUES RECHERCHES (Int. Cl.4)

A 01 K
A 01 M

Le présent rapport de recherche a été établi pour toutes les revendications

| Lieu de la recherche | Date d'achèvement de la recherche | Examinateur |
|---|---|---|
| LA HAYE | 28-04-1986 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82